# EUROPÄISCHE PATENTANMELDUNG

(11) **EP 1 837 233 A1**
(43) Veröffentlichungstag der Anmeldung: **26.09.2007**
(21) Anmeldenummer: 07003695.9
(22) Anmeldetag: 23.02.2007
(51) Int. Cl.: B60P 1/43, B60P 1/44, H02B 1/044

(54) **Rampe zur Anbringung im Bereich des Einstiegs eines Fahrzeuges, z.B. eines Busses**

(30) Priorität: 23.03.2006 DE 202006004644 U
(71) Anmelder: Hübner Transportation GbmH, 34123 Kassel (DE)
(72) Erfinder: Paul, Oliver, 34266 Niestetal (DE)
(74) Vertreter: WALTHER, WALTHER & HINZ Patentanwälte - European Patent Attorneys

(57) **Zusammenfassung**

Gegenstand der vorliegenden Erfindung ist eine Rampe zur Anbringung im Bereich des Einstieges eines Fahrzeugs, z. B. eines Busses, umfassend eine Rampenplatte (5), die von einer im Boden (2) des Fahrzeugs angeordneten Rampenwanne (3) aufnehmbar ist, wobei die Rampe einen Näherungsschalter (10) aufweist, um festzustellen, ob die Rampenplatte (5) in der Rampenwanne (3) einliegt, wobei der Näherungsschalter (10) durch eine Klemmeinrichtung (12, 13a, 14) nahezu oberflächenbündig von einer Fläche (7) der Rampenwanne (3) aufnehmbar ist, wobei die Fläche (7) zu der Rampenplatte (5), im aufgenommenen Zustand der Rampenplatte (5) durch die Rampenwanne (3), unmittelbar benachbart liegt.

## Beschreibung

Die vorliegende Erfindung betrifft eine Rampe zur Anbringung im Bereich des Einstiegs eines Fahrzeugs, z. B. eines Busses, umfassend eine Rampenplatte, die von einer im Boden des Fahrzeugs angeordneten Rampenwanne aufnehmbar ist.

In jüngster Vergangenheit wurden immer mehr Busse, und hier insbesondere Busse des Personennahverkehrs, mit Rampen ausgerüstet, um auch Rollstuhlfahrern den Zugang zu den Bussen zu ermöglichen. Der Einsatz von Rampen ist allerdings auch bei Schienenfahrzeugen, insbesondere bei Straßenbahnen, bekannt. Gerade bei Bussen bestand in jüngster Zeit das Problem, dass auf Grund einer Vielzahl zusätzlicher Aggregate das Busgewicht erheblich zugenommen hat. Zur Begrenzung des Gesamtgewichtes eines Busses ist man daher bestrebt, das Gewicht der einzelnen Aggregate zu minimieren.

So ist z. B. aus der DE 20 2005 010 182.6 eine Klapprampe, umfassend eine Rampenwanne und eine klappbar damit verbundene Rampenplatte, bekannt, bei der die Rampenwanne vollständig als Kunststoffspritzgussteil ausgebildet ist und einen entsprechend dünnen Boden aufweist. Bei einer Klapprampe ist die Rampenplatte mit der Rampenwanne durch ein Scharnier verbunden. Im Betriebszustand der Rampe ist die Rampenplatte von der Rampenwanne abgeklappt, um hierdurch Rollstuhlfahrern den Einstieg in das Fahrzeug zu ermöglichen. Insbesondere bei längeren Fahrzeugen ist für den Fahrer nicht notwendigerweise unmittelbar ersichtlich, ob die Rampe sich noch im ausgeklappten Zustand befindet, oder die Rampenplatte sich bereits wieder in der Rampenwanne befindet.

Insofern wird ein Näherungsschalter vorgeschlagen, der durch ein Signal den Fahrer davon in Kenntnis setzt, wenn die Rampenplatte in der Rampenwanne einliegt. Die Rampenplatte weist eine Querschnittsform auf, die der Querschnittsform der Wanne entspricht. Das heißt, dass im zusammengeklappten Zustand der Rampe die Rampenplatte vollflächig von der Rampenwanne aufgenommen wird, d. h. die Rampenplatte liegt mit ihrer Oberseite unmittelbar an dem Boden der Rampenwanne an.

Um nun sicherzustellen, dass dies auch möglich ist, wenn insbesondere die Rampenwanne einen Näherungsschalter aufweist, wird erfindungsgemäß vorgesehen, dass der Näherungsschalter durch eine Klemmeinrichtung nahezu oberflächenbündig von einer Fläche der Rampenwanne aufnehmbar ist, die zu der Rampenplatte, im aufgenommenen Zustand der Rampenplatte durch die Rampenwanne, also im eingeklappten Zustand, unmittelbar benachbart liegt. Hieraus wird deutlich, dass irgendwelche Ausnehmungen für den Näherungsschalter im Bereich der Rampenplatte, um eine plane Anlage der Oberfläche der Rampenplatte der Rampenwanne zu ermöglichen, nicht erforderlich sind. Vorzugsweise ist der Näherungsschalter im Boden der Rampenwanne angeordnet, da hier auf Grund des vorhandenen Platzes der Näherungsschalter am einfachsten unterzubringen ist.

In Bezug auf die Klemmeinrichtung ist im Einzelnen vorgesehen, dass die Klemmeinrichtung eine auf den Näherungsschalter aufschraubbare Gewindehülse mit Innengewinde mit endseitig überstehendem Bund oder Rand sowie ein die Gewindehülse überstülpendes und an dem Näherungsschalter fixierbares Konterglied umfasst, wobei zwischen Gewindehülse und Konterglied der Boden der Rampenwanne eingespannt ist. Zur stabilen Aufnahme des Näherungsschalters reicht es aus, wenn der seitlich überstehende Bund oder Rand der Gewindehülse eine Höhe von etwa 1 bis 2 mm aufweist. Hieraus wird deutlich, dass durch die Gewindehülse mit dem seitlich überstehenden Rand einerseits und dem Konterglied andererseits, das auf dem Näherungsschalter verschieblich fixierbar ist, dieser Näherungsschalter insgesamt an dem Boden der Rampenwanne klemmbar fixierbar ist.

Nach einer besonderen Ausführungsform ist vorgesehen, dass das Konterglied ein Innengewinde zum Aufschrauben auf den Näherungsschalter aufweist. Eine weitere Ausführungsform zeichnet sich dadurch aus, dass das Konterglied als Ring ausgebildet ist, wobei der Ring durch eine Mutter gegen die Gewindehülse verspannbar ist. In jedem Fall ist es so, dass dadurch, dass das Konterglied die Gewindehülse überstülpend übergreift, die Wandung des Kontergliedes nach Art eines Winkels ausgebildet ist.

Anhand der Zeichnungen wird die Erfindung nachstehend beispielhaft näher erläutert.
- Figur 1: zeigt schematisch eine Klapprampe in perspektivischer Darstellung;
- Figur 2: zeigt die Anbringung des Näherungsschalters im Boden der Rampenwanne im Schnitt;
- Figur 3: zeigt eine Darstellung gemäß Figur 2, wobei das Konterglied als Gewindering ausgebildet ist.

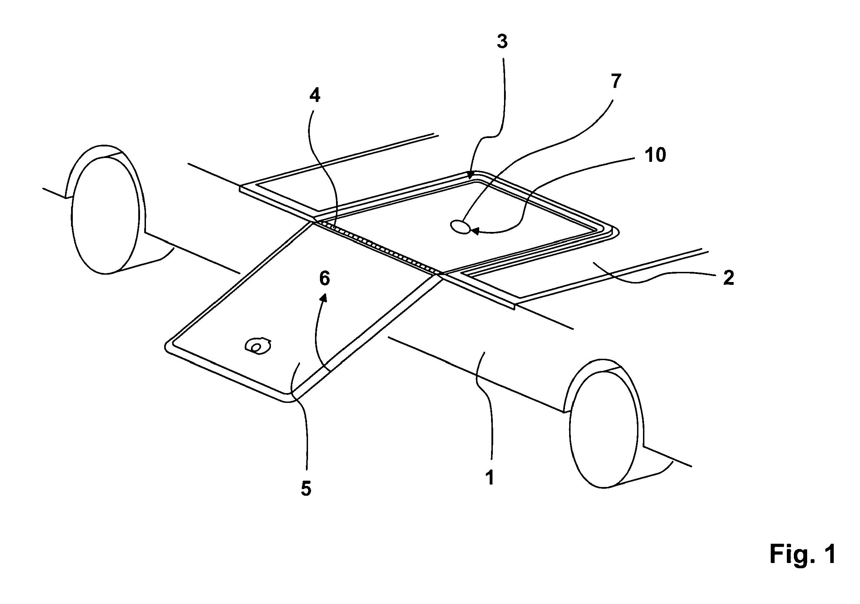

Das Fahrzeug ist gemäß Figur 1 mit 1 bezeichnet. Im Boden 2 des Fahrzeugs befindet sich die mit 3 bezeichnete Rampenwanne, die durch ein Scharnier 4 die Rampenplatte 5 in Richtung des Pfeiles 6 klappbar aufnimmt.

Im Boden 7 der Rampenwanne 3 ist der 10 bezeichnete Näherungsschalter angeordnet.

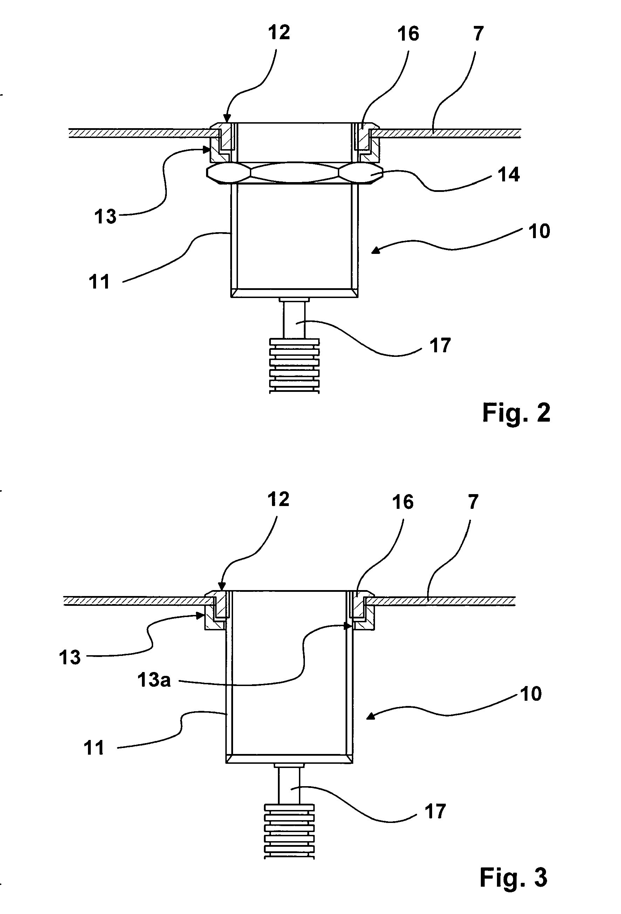

Die Anbringung des Näherungsschalters 10 am Boden 7 der Rampenwanne 3 ergibt sich unmittelbar in Anschauung der Figur 2. Der mit 10 bezeichnete Näherungsschalter weist ein Außengewinde 11 auf, wobei auf dem Näherungsschalter über dem Boden 7 der Bund 16 der Gewindehülse 12 aufliegt, wobei die Gewindehülse auf das Außengewinde 11 des Näherungsschalters 10 aufschraubbar ist. Das Konterglied 13 ist als Ring ausgebildet, dessen Wandung winklig ausgebildet ist, wie sich dies aus Figur 2 unmittelbar ergibt. Der als Konterglied ausgebildete Ring 13 überstülpt somit die Gewindehülse 12. Durch die Mutter 14 wird der Ring im Bereich des Bundes 16 der Gewindehülse 12 gegen den Boden 7 gedrückt.

Der seitlich überstehende Bund oder Rand 16 der Gewindehülse 12 hat eine geringe Höhe von lediglich 1 oder 2 mm.

Bei der Ausführungsform gemäß Figur 3, bei der das als Ring ausgebildete Konterglied 13 ein Innengewinde 13a aufweist, wird das als Ring ausgebildete Konterglied unmittelbar auf das Gewinde 11 des Näherungsschalters 10 aufgeschraubt. Die Art der Klemmung ist die gleiche wie bei der Ausführungsform gemäß Figur 2. Das Kabel für die Stormversorgung des Näherungsschalters ist mit 17 bezeichnet.

## Patentansprüche

1. Rampe zur Anbringung im Bereich des Einstieges eines Fahrzeugs, z. B. eines Busses, umfassend eine Rampenplatte (5), die von einer im Boden (2) des Fahrzeugs angeordneten Rampenwanne (3) aufnehmbar ist, wobei die Rampe einen Näherungsschalter (10) aufweist, um festzustellen, ob die Rampenplatte (5) in der Rampenwanne (3) einliegt, wobei der Näherungsschalter (10) durch eine Klemmeinrichtung (12, 13a, 14) nahezu oberflächenbündig von einer Fläche (7) der Rampenwanne (3) aufnehmbar ist, wobei die Fläche (7) zu der Rampenplatte (5), im aufgenommenen Zustand der Rampenplatte (5) durch die Rampenwanne (3), unmittelbar benachbart liegt.

2. Rampe nach Anspruch 1,
**dadurch gekennzeichnet,**
**dass** der Näherungsschalter (10) im Boden (7) der Rampenwanne (3) angeordnet ist.

3. Rampe nach Anspruch 1,
**dadurch gekennzeichnet,**
**dass** die Klemmeinrichtung eine auf den Näherungsschalter (10) aufschraubbare Gewindehülse (12) mit endseitig seitlich überstehendem Bund (16) sowie ein die Gewindehülse (12) überstülpendes, an den Näherungsschalter fixierbares Konterglied (13) umfasst, wobei zwischen Gewindehülse (12) und Konterglied (13) der Boden der Rampenwanne (3) einspannbar ist.

4. Rampe nach einem der voranstehenden Ansprüche,
**dadurch gekennzeichnet,**
**dass** das Konterglied (13) ein Innengewinde zum Aufschrauben auf den Näherungsschalter (10) aufweist.

5. Rampe nach einem der voranstehenden Ansprüche,
**dadurch gekennzeichnet,**
**dass** die Wandung des Kontergliedes (13) nach Art eines Winkels ausgebildet ist.

6. Rampe nach einem der voranstehenden Ansprüche,
**dadurch gekennzeichnet,**
**dass** das Konterglied (13) als Ring ausgebildet ist, wobei der Ring durch eine Mutter gegen die Gewindehülse (12) verspannbar ist.

7. Rampe nach einem der voranstehenden Ansprüche,
**dadurch gekennzeichnet,**
**dass** die Rampenplatte (5) von der Rampenwanne (3) klappbar aufnehmbar ist.
